# EUROPEAN PATENT SPECIFICATION

(11) **EP 4 394 158 B1**
(45) Date of publication and mention of the grant of the patent: **18.02.2026**
(21) Application number: 23208943.3
(22) Date of filing: 10.11.2023
(51) Int. Cl.: E21B 11/00, B25F 5/02

(54) **HANDHELD DIGGING TOOL**
TRAGBARES GRABWERKZEUG
OUTIL D'EXCAVATION PORTATIF

(30) Priority: 28.12.2022 CN 202211695830; 26.10.2023 CN 202322901663 U; 26.10.2023 CN 202311410611; 26.10.2023 CN 202311403155
(43) Date of publication of application: 03.07.2024
(73) Proprietor: Nanjing Chervon Industry Co., Ltd., Nanjing, Jiangsu 211106 (CN)
(72) Inventor: XIE, Hongyao, Nanjing (CN); LIU, Hanhua, Nanjing (CN); ZHU, Rui, Nanjing (CN); LIU, Zhi, Nanjing (CN); ZHAO, Xiaozhe, Nanjing (CN)
(74) Representative: Sun, Yiming

(56) References cited:
- EP-A1- 3 955 454
- EP-A2- 3 322 086
- WO-A1-2021/098417
- US-A1- 2007 240 892

## Description

### TECHNICAL FIELD

The present invention relates to a power tool and, in particular, to a handheld digging tool.

### BACKGROUND

Manually operated digging apparatuses, such as earth drills, are widely used in the fields of landscaping, planting, tree planting, geophysical prospecting, road construction, and the like. Typically, a manually operated digging apparatus is used for digging a pit and drilling a hole when planting is performed on a sloping field, a sand, and hard ground. Typically, the manually operated digging apparatus includes a drive member and a rotatable drill bit, where a spiral drill blade is mounted coaxially around the drill bit. An electric motor in the drive member drives the drill bit and rotates the spiral drill blade downward into soil.

Ice drills are mainly used for breaking ice in a cold winter. The usage condition of an ice drill differs from the usage condition of an earth drill in characteristics of a working surface and performance requirements on the machine.

EP3322086A2 discloses a configurable motor system including a housing having an electrical power input and an interface receptacle, an electric motor received in the housing, an output shaft rotationally driven by the electric motor, a motor control circuit received in the housing and configured to control power delivery from the electrical power input to the electric motor, and a modular interface in communication with the motor control circuit through the interface receptacle. The modular interface is configured to receive one or more user inputs and to direct the motor control circuit to control power delivery to the electric motor based on the user input and based on preprogrammed instructions corresponding to a tool to which the motor system is attached.

This part provides background information related to the present invention, which is not necessarily the existing art.

### SUMMARY

An object of the present invention is to solve or at least alleviate some or all of the preceding problems. To this end, an object of the present invention is to provide a handheld digging tool so that better performance and greater comfort of use are provided.

To achieve the preceding object, the present invention is set out in the appended set of claims.

### BRIEF DESCRIPTION OF DRAWINGS

FIG. 1 is a structural view of a handheld digging tool of the present invention, where a first drill rod mechanism is mounted;
FIG. 2 is a structural view showing a main body, a first drill rod mechanism, and a second drill rod mechanism in an example of a handheld digging tool of the present invention;
FIG. 3 is a structural view of a main body from another perspective in an example of the present invention;
FIG. 4 is a schematic view of an internal structure of a main body in an example of the present invention;
FIG. 5 is a schematic view showing the structure of a main body (with a battery pack removed) and a first support portion in an example of the present invention;
FIG. 6 is a sectional view of FIG. 5;
FIG. 7 is a structural view of a support mechanism in an example of the present invention;
FIG. 8 is a top view of FIG. 7; and
FIG. 9 is a structural diagram of a control mechanism in an example of the present invention.

### DETAILED DESCRIPTION

Before any examples of this invention are explained in detail, it is to be understood that this invention is not limited to its application to the structural details and the arrangement of components set forth in the following description or illustrated in the above drawings.

In this invention, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this invention, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this invention generally indicates that the contextual associated objects belong to an "and/or" relationship.

In this invention, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this invention, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this invention, those skilled in the art will understand that a function performed by an assembly may be performed by one assembly, multiple assemblies, one member, or multiple members. Likewise, a function performed by a member may be performed by one member, an assembly, or a combination of members.

In this invention, the terms "up", "down", "left", "right", "front", and "rear" " and other directional words are described based on the orientation or positional relationship shown in the drawings, and should not be understood as limitations to the examples of this invention. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this invention, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this invention, the term "device", "module" or "unit" may be implemented in the form of hardware or software to achieve specific functions.

In this invention, the terms "computing", "judging", "controlling", "determining", "recognizing" and the like refer to the operations and processes of a computer system or similar electronic computing device (e.g., controller, processor, etc.).

To clearly illustrate technical solutions of the present invention, an upper side, a lower side, a left side, a right side, a front side, and a rear side are defined in the drawings of the specification.

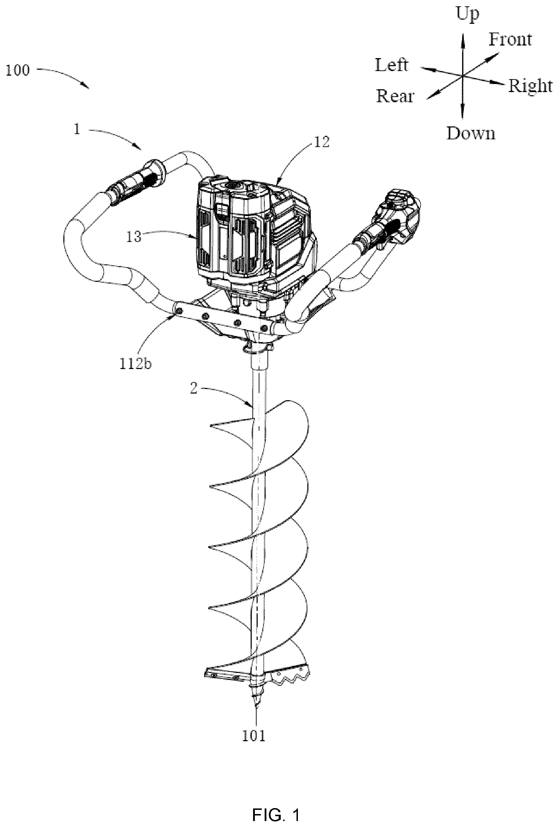

FIG. 1 shows a power tool 100 according to a first example of the present invention. In this example, the power tool 100 is specifically a handheld digging tool. It is to be understood that the power tool 100 may be a handheld stirring tool.

The handheld digging tool 100 is used for drilling deep holes of a predetermined dimension in a base material. In this example, the handheld digging tool 100 includes a main body 1 and a first drill rod mechanism 2 with a first function, where the first drill rod mechanism 2 is suitable for drilling holes in the ground, for example, the base material is soil, sand, a wall, or wood. When the main body 1 is adapted for the first drill rod mechanism 2, the handheld digging tool 100 is an earth drill. The main body 1 is also adapted for at least a second drill rod mechanism 3 with a second function. The second drill rod mechanism 3 is suitable for drilling holes in ice. The first drill rod mechanism 2 and the second drill rod mechanism 3 are both used for rotating about a first axis 101 to drill the holes along the direction of the first axis 101. When the main body 1 is adapted for the second drill rod mechanism 3, the handheld digging tool 100 is an ice drill. The main body 1 in this example is adaptable to one of the first drill rod mechanism 2 and the second drill rod mechanism 3. Optionally, each of the first drill rod mechanism 2 and the second drill rod mechanism 3 has a different diameter. Optionally, each of the first drill rod mechanism 2 and the second drill rod mechanism 3 has a different length. Optionally, the main body 1 is also adaptable to a third drill rod mechanism having a different working condition from that of the first drill rod mechanism 2 and that of the second drill rod mechanism 3, and the third drill rod mechanism has an interface through which the third drill rod mechanism and the main body 1 mate with each other. The first drill rod mechanism 2 includes a drill shaft 21 and a spiral drill blade 22. A drill rod mechanism with a different function has a drill shaft 21 of a different dimension and a different shape and a spiral drill blade 22 of a different dimension and a different shape. When the power tool is the handheld stirring tool, the first drill rod mechanism includes a rotating shaft and a spiral blade.

For ease of reference, a drill rod mechanism is used for referring to either the first drill rod mechanism 2 or the second drill rod mechanism 3, but cannot be used as a limitation on the present invention.

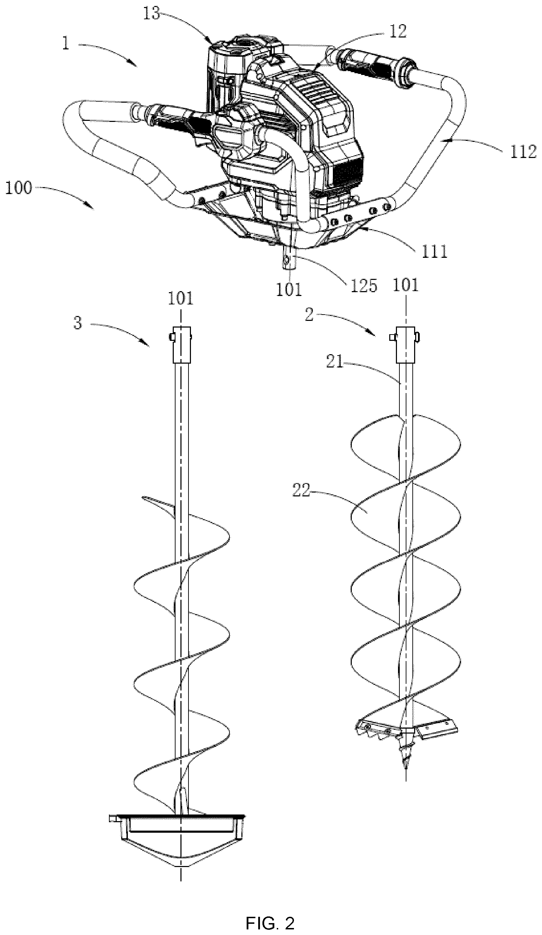

As shown in FIGS. 1 to 3, the main body 1 includes a support mechanism 11, a drive mechanism 12, and a power supply. The support mechanism 11 is used for supporting the drive mechanism 12. The power supply is a battery pack 13. The battery pack 13 cooperates with a corresponding power supply circuit 166 to supply power to at least the drive mechanism 12 in the handheld digging tool 100. It is to be understood by those skilled in the art that the power supply is not limited to the scenario where the battery pack 13 is used, and the power may be supplied to the corresponding components in the main body through mains electricity or an alternating current (AC) power supply which cooperates with a corresponding rectifier circuit, filter circuit, and voltage regulation circuit.

In this example, the nominal voltage of the battery pack 13 is greater than 40 V and less than 80 V. In some examples, the nominal voltage of the battery pack 13 is 56 V. The capacity of the battery pack 13 is 4 Ah to 5 Ah. In some examples, the capacity of the battery pack 13 is 2.5 Ah to 12 Ah. Optionally, the battery pack 21 may be a lithium battery pack, a solid-state battery pack, or a pouch-type battery pack.

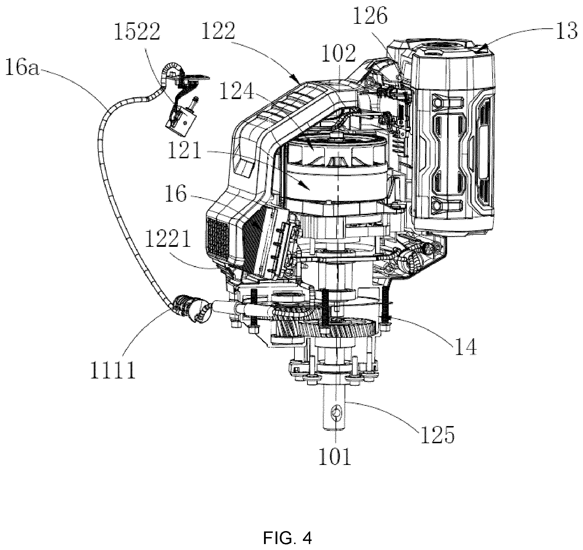

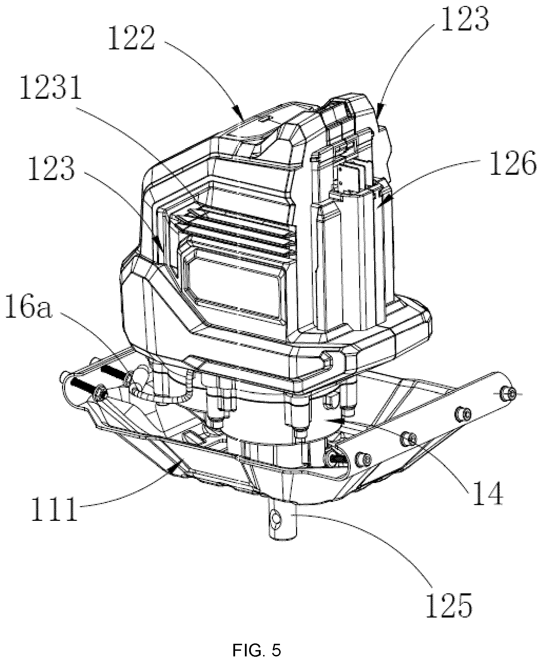

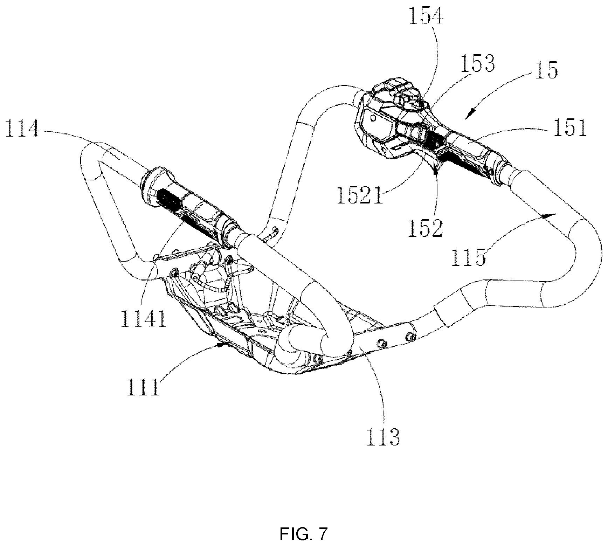

As shown in FIGS. 4 to 7, the drive mechanism 12 includes an electric motor 121. The electric motor 121 is used for driving the drill rod mechanism. In this example, the electric motor 121 is a DC motor. The electric motor 121 is a brushless DC motor with an external rotor. As shown in FIG. 7, the electric motor 121 includes a stator and a rotor. The stator 1211 includes a stator core and a stator winding. The rotor 1213 includes a rotor core and a permanent magnet. An electric motor shaft 1215 rotating about an electric motor axis 102 is formed on or connected to the rotor 1213. The electric motor shaft is used for outputting power. Regarding the electric motor with the external rotor, the rotor is sleeved on the outer side of the stator. In some examples, the outer diameter of the electric motor 121 is greater than or equal to φ80 mm. In some examples, the outer diameter of the electric motor 121 is greater than or equal to φ90 mm. In some examples, the outer diameter of the electric motor 121 is greater than or equal to φ100 mm. In this example, the outer diameter of the electric motor 121 is φ105 mm.

In this example, the maximum output torque of the handheld digging tool 100 is greater than or equal to 80 N·m. In some examples, the maximum output torque of the handheld digging tool 100 is greater than or equal to 81 N·m , 83 N·m , 85 N·m , 88 N·m , or 90 N·m. In the present invention, in the case where a DC power supply is used, the output torque of the handheld digging tool may reach the level of an AC product.

In this example, the weight of the handheld digging tool 100 with the battery pack 13 mounted is greater than or equal to 14 kg and less than or equal to 25 kg. The weight of the handheld digging tool 100 with the battery pack 13 mounted is greater than or equal to 14 kg and less than or equal to 20 kg. The nominal voltage of the battery pack is greater than 40 V, and the ratio of the maximum output torque of the handheld digging tool to the weight of the handheld digging tool 100 is higher than or equal to 4.0 N·m/kg. In this example, the electric motor with the external rotor is used so that the output performance of the electric motor is improved and output torque per unit weight is high. On the other hand, the nominal voltage of the battery pack is less than 80 V so that the weight of the machine can be reduced, and the high-performance electric motor is used so that the handheld digging tool of the present invention has high output torque per unit weight.

In some examples, the ratio of the maximum output torque of the handheld digging tool 100 to the capacity of the battery pack 13 is higher than or equal to 20 N·m/Ah. As can be seen from the related art, high output torque necessarily corresponds to a high current and a low rotational speed, and the capacity of the battery pack 13 is related to the current of the battery pack 13. In the present invention, the ratio of the maximum output torque to the capacity of the battery pack 13 is set here to be higher than or equal to 20 N·m/Ah so that the balance between the output torque of the electric motor 121 and the high current is achieved. The performance of the electric motor 121 is improved. It is ensured that the electric motor 121 can output the high torque, but the current is not improved. Thus, the performance of the handheld digging tool 100 is improved. Performance requirements of the ice drill and the earth drill can be both met. The irreversible damage to the battery pack 13 caused by overcurrent and a temperature rise can be effectively avoided.

The handheld digging tool 100 has at least a first output rotational speed adapted for the first function and a second output rotational speed adapted for the second function. Optionally, the drive mechanism includes a first gear for outputting the first output rotational speed and a second gear for outputting the second output rotational speed. Optionally, the electric motor 121 includes at least a high-speed gear and a low-speed gear. When the electric motor 121 is in the high-speed gear, a rotational speed of the electric motor is greater than or equal to 5500 rpm and less than or equal to 7000 rpm. When the electric motor is in the low-speed gear, the rotational speed of the electric motor is greater than or equal to 4500 rpm and less than or equal to 6000 rpm. Optionally, the first output rotational speed is any rotational speed value or any rotational speed range for the high-speed gear of the electric motor. The second output rotational speed is any rotational speed value or any rotational speed range for the low-speed gear of the electric motor. The first output rotational speed is different from the second output rotational speed. In some examples, the maximum value of the first output rotational speed is different from the maximum value of the second output rotational speed. In some examples, the first output rotational speed is substantially different from the second output rotational speed, but the output rotational speeds may be the same at a moment or for a period of time throughout a working process.

The drive mechanism 12 further includes a transmission assembly 14 and an output shaft 125. One end of the transmission assembly 14 mates with the electric motor 121 and the other end of the transmission assembly 14 mates with the output shaft 125 so that the power outputted from the electric motor 121 is transmitted to the output shaft 125. The output shaft 125 is adaptable to both the first drill rod mechanism 2 and the second drill rod mechanism 3 by fasteners. The output shaft 125 is disposed concentrically and coaxially with both the first drill rod mechanism 2 and the second drill rod mechanism 3.

In this example, the transmission assembly 14 is a reduction gearbox. Optionally, the transmission assembly uses a gear mechanism for speed reduction and torque increase to further improve the working capability of the handheld digging tool. The transmission assembly 14 includes a cylindrical gear transmission. Optionally, the transmission assembly 14 includes a first driving gear 141, a first driven gear 142, an intermediate shaft 143, a second driving gear 144, and a second driven gear 145. The first driving gear 141 is formed at or connected to an end of the electric motor shaft 1215. The first driving gear 141 rotates about the electric motor axis 102. The first driving gear 141 drives the first driven gear 142. The first driven gear 142 and the first driving gear 141 mesh with each other externally. The first driven gear 142 is connected to the intermediate shaft 143. The first driving gear 141 forms a reduction transmission with the first driven gear 142. The intermediate shaft 143 rotates about a third axis 103. The second driving gear 144 is formed on or connected to the intermediate shaft 143. The second driving gear 144 drives the second driven gear 145. The second driven gear 145 and the second driving gear 144 mesh with each other externally. The second driving gear 144 forms a reduction transmission with the second driven gear 145. The second driven gear 145 is connected to the output shaft 125. The second driven gear 145 rotates about the first axis 101. A two-stage reduction transmission is used so that the working capability of the handheld digging tool is improved. In this example, the rotational speed of the first drill rod mechanism 2 is greater than or equal to 50 rpm and less than or equal to 220 rpm.

As shown in FIGS. 1 to 3 and FIGS. 5 to 8, the support mechanism 11 is used for supporting the drive mechanism 12. The support mechanism 11 includes a first support portion 111 and a handle frame 112. The first support portion 111 is basically in the shape of a plate or the shape of a disk with a flange, and the first support portion 111 is fixedly mounted to the handle frame 112. The first support portion 111 is provided with a through hole 1111 mating with the drive mechanism 12 and a member for bearing the moment of force. The member for bearing the moment of force is used for bearing the moment of force transmitted from the drive mechanism 12 to the first support portion 111. The number of members for bearing the moment of force may be set as desired. When multiple members for bearing the moment of force exist, the members for bearing the moment of force are evenly distributed at the circumference of the through hole 1111. With this configuration, all the members for bearing the moment of force can bear an approximately equal moment, thereby effectively avoiding the case where some members for bearing the moment of force are easily damaged because of unevenly bearing the moment of force.

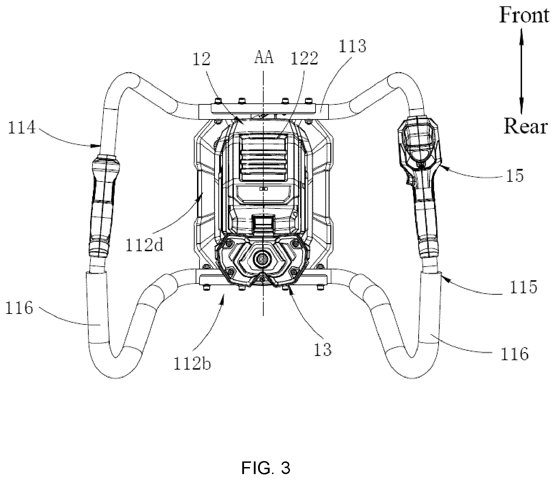

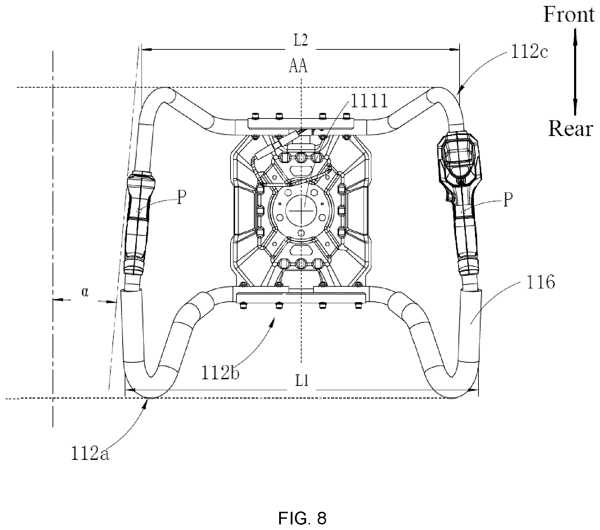

The handle frame 112 bends and extends upward along the circumferential side of the first support portion 111. As shown in FIGS. 3 and 7, the handle frame 112 includes a main handle frame 113, a first handle 114, and a second handle 115. The main handle frame 113 is connected to the first support portion 111. The first support portion 111 is fixedly mounted on the main handle frame 113 by screws. As shown in FIGS. 3 and 8, a first accommodating space 112b for accommodating an operator is formed on a first side 112a of the handle frame 112. In this example, the first side 112a is a side facing the operator, that is, the rear side. The side opposite to the first side 112a is a second side 112c of the handle frame 112, and the second side 112c is the front side. The first handle 114 and the second handle 115 extend from the first side 112a to the second side 112c, that is, from the front side to the rear side. Optionally, the first handle 114 and the second handle 115 do not necessarily extend horizontally along a front and rear direction, and the first handle 114 and the second handle 115 extend from the direction of the first side 112a to the direction of the second side 112c and incline to a certain degree in an up and down direction. Each of the first handle 114 and the second handle 115 may have a higher vertical position than the main handle frame 113 and the first support portion 111. In other words, when the operator grips the two handles and operates the power tool 100, the main handle frame 113 and the first support portion 111 may be at a level near the waist or thigh of the operator. In this example, each of the portion of the first handle 114 and the portion of the second handle 115 which are located on the first side 112a is separately provided with a sheath 116. The sheath 116 is made of a flexible material. The sheath 116 is disposed basically around the first accommodating space 112b and used for protecting a user.

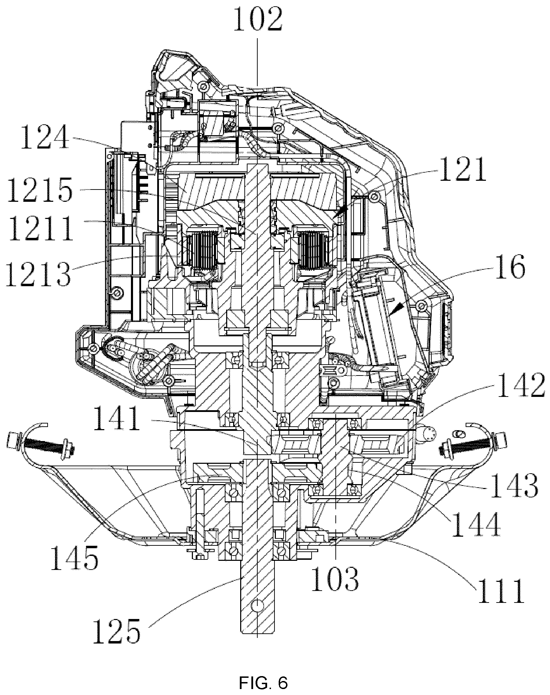

As shown in FIGS. 6 and 7, the first handle 114 and the second handle 115 extend from the first side 112a to the second side 112c to approach each other. Along the direction of the first axis 101, the included angle α between a projection of the first handle 114 and the front and rear direction is greater than 0° and less than or equal to 30°. In some examples, the vertical line between the first side 112a and the second side 112c in a direction perpendicular to the first axis 101 is set as a second axis 102. That is to say, the front and rear direction is the direction of the second axis 102. The direction from the first side 112a to the second side 112c is a forward direction, that is to say, the direction from the rear side to the front side is the forward direction. The second axis 102 and the first handle 114 are projected along the direction of the first axis 101, and the included angle α between the forward direction of the second axis 102 and the projection of the first handle 114 is greater than 0° and less than or equal to 30°. In some examples, the included angle α between the forward direction of the second axis 102 and the projection of the first handle 114 is greater than 0° and less than or equal to 15°. This design is more in line with the usage habit of the operator so that the operator has a better grip feeling and applies sufficient torque without too much difficulty.

In this example, the first handle 114 and the second handle 115 are disposed symmetrically about a first plane AA, the first axis 101 is in the first plane, and the first plane is parallel to the second axis 102. In this example, the first plane is the AA plane in the front and rear direction. Optionally, the first handle 114 and the second handle 115 are symmetrical about the first plane and the first plane AA is coplanar with the first axis 101 of the drill rod mechanism, which is more favorable for the operator to apply a force. The vertical distance between the first handle 114 and the second handle 115 on the first side 112a of the handle frame 112 is L1, and the vertical distance between the first handle 114 and the second handle 115 on the second side 112c of the handle frame 112 is L2, where L1 is greater than L2, and L1 is greater than or equal to 550 mm and less than or equal to 650 mm.

The first handle 114 is provided with a first grip 1141 to be gripped, the second handle 115 is provided with a second grip to be gripped, and the vertical distance between the first grip 1141 and the second grip is greater than or equal to 550 mm and less than or equal to 600 mm. A vertical line between the force application point P of the first grip 1141 and the force application point P of the second grip intersects with the first axis 101. The vertical distance between the first grip 1141 and the second grip is the vertical distance between the two force application points. Optionally, each of the first grip 1141 and the second grip separately includes a grip portion fitting snugly around a palm and a finger grip portion for accommodating the palm, and the application point is located basically at the center of the grip portion. According to the average palm width of adults, the force application point is basically shifted by 20mm to 35mm from the finger grip position of a thumb to the grip portion.

In this example, the first grip on a side of the first handle 114 is configured to be a grip cover, and the second grip on a side of the second handle 115 is mounted with a handle assembly 15. When the power tool 100 is in a normal working state, the handle assembly 15 is located on the second handle 115 gripped by the operator's right hand. An appropriate distance is set, which is favorable for the operator to control the machine. In addition, a grip point intersects with the first axis 101, which is more favorable for the operator to control the machine when torsion is outputted.

The handle assembly 15 includes a handle housing 151, a switch unit 152, a locking unit 153, and a commutation and skipping unit 154. The handle housing 151 includes a top wall, a bottom wall disposed opposite to the top wall, and sidewalls. The top wall, the bottom wall, and the sidewalls together surround and form an accommodating cavity for accommodating a start unit, the locking unit 153, and the commutation and skipping unit 154. The switch unit 152 includes a trigger 1521 pivotally mounted on the handle housing 151, a start switch 1522 cooperating with the trigger, and an elastic element for resetting the trigger. The trigger 1521 is manipulated by the user. The trigger passes through and faces the bottom wall of the handle housing 151. Optionally, the bottom wall of the handle housing 151 is the finger grip position for accommodating the user's four fingers. With this configuration, it can be convenient for the user to manipulate the trigger with four fingers when the user grips the handle assembly 15 by hand, thereby bringing great convenience to the operator. The start switch 1522 (for example, a microswitch) directly sends a start signal to the drive mechanism 12, which is the case where the start switch 1522 directly controls the drive mechanism 12 to work. The start switch 1522 (for example, a signal switch) sends a start signal to the control unit and then the control unit controls the drive mechanism 12 to work, which is the case where the start switch 1522 indirectly controls the drive mechanism 12 to work. When the trigger is released, the trigger is reset under the action of the elastic element for resetting the trigger.

In this example, the rotational speed of the electric motor 121 is adjusted according to the trigger stroke of the trigger switch. In this example, the start switch 1522 is coupled to a sliding rheostat, and the sliding rheostat outputs different analog signal according to the different trigger stroke of the trigger 1521. The trigger stroke of the trigger 1521 is positively correlated with the duty cycle of a PWM signal of the electric motor 12, and the duty cycle of the PWM signal is positively correlated with the rotational speed of the electric motor 12. When the trigger stroke of the trigger 1521 is relatively short, the duty cycle of the PWM signal is relatively small, and the rotational speed of the electric motor 12 is relatively low in this case. In some examples, the mapping relationship between the trigger stroke of the trigger 1521 and the PWM signal is stored in the handheld digging tool, and the mapping relationship may be linear or non-linear.

As shown in FIGS. 3 to 6, the first support portion 111 and the handle frame 112 form a second accommodating space 112d, and at least part of the drive mechanism 12 is accommodated in the second accommodating space 112d. The drive mechanism 12 is mounted on the first support portion 111 and used for driving a drill rod assembly to work. The drive mechanism 12 further includes a housing 122 and an air deflector 123. The housing 122 and the air deflector 123 form an accommodating cavity. The accommodating cavity is used for accommodating the electric motor 121, the transmission assembly 14, and a control mechanism 16.

The drive mechanism 12 is fixedly mounted on the first support portion 111 by screws. The housing 122 is provided with a battery connection portion 126. The battery connection portion 126 is used for connecting the battery pack 13. In this example, the battery connection portion 126 is disposed on the side of the electric motor 121 facing the operator. Thus, the distance between the operator and the drill rod mechanism is maximized, thereby ensuring the operation safety of the operator. In this example, the battery connection portion 126 is symmetrical about the first plane AA, and the plane of symmetry of the battery connection portion 126 is coplanar with the first axis 101 in this case. With this configuration, the weight of the battery pack 13 is equal on two sides of the plane of symmetry so that it is convenient for the user to balance the power tool 100.

A fan 124 is disposed at the end of the electric motor 121 facing away from the transmission assembly 14. An air outlet 1231 is disposed on the side of the air deflector 123 facing the electric motor 121. In this example, at least two air outlets 1231 are provided. Optionally, at least one air outlet 1231 is disposed separately on the left side and the right side. The air outlets 1231 are disposed basically in the circumferential direction of the fan 124.

The control mechanism 16 is configured to control the running of the electric motor 121. The control mechanism 16 is disposed in the circumferential direction of the electric motor. In this example, the control mechanism 16 and the battery pack 13 are disposed on two sides of the electric motor 121 separately. Optionally, the battery pack 13 is disposed on the rear side of the electric motor 121, and the control mechanism 16 is disposed on the front side of the electric motor 121. Optionally, the control mechanism is disposed at the position of the output end of the electric motor 121. In the direction of the electric motor axis 102, the control mechanism 16 basically has no overlapping portion with the transmission assembly 14, and optionally, in the direction of the electric motor axis 102, the control mechanism 16 basically has no overlapping portion with the stator of the electric motor 121 so that the heat transfer between the electric motor, the transmission assembly, and the control mechanism is reduced. In this example, the housing 122 is provided with an air inlet 1221 at a position corresponding to the control mechanism.

In this example, the control mechanism 16 includes a cable 16a. The cable 16a is guided out of the drive mechanism through the hole in a sidewall of the air deflector 123. The cable 16a is connected to the start switch in the handle assembly 15 after entering the handle frame 112 through the first support portion 111. Further, the electrical connection of the start switch 1522 to the control mechanism 16 is implemented. In this example, the handle frame 112 has a hollow tube structure, and a portion of the first support portion 111 connected to the main handle frame 113 forms a tube structure for the cable 16a to enter. Optionally, the cable 16a is fixed to the first support portion 111 through a cable clip portion 1111.

In this example, a member for transmitting the moment of force is disposed on the housing. The member for bearing the moment of force is a boss, and the member for transmitting the moment of force is a slot mating with the boss.

In another alternative example, two or more battery connection portions 126 are disposed on the housing 122 to connect two or more battery packs 13, each of which has a nominal voltage greater than 40 V and less than 80 V.

The housing 122 may also provide a user interface for the operator to control and/or configure the power tool 100. The user interface may include one or more of an indicator, a display, a mechanical button, a membrane button, and a touchscreen. The housing may also have an electrical interface for electrical communication with one or more sensors disposed outside the housing or a communication interface for communication connection to one or more sensors disposed outside the housing. In some examples, the user uses an external device including a smartphone, a tablet computer, a notebook computer, and an intelligent wearable device to set control parameters of the handheld digging tool and obtain feedback on a running state through Bluetooth, a wireless local area network (WLAN), and wireless transmission.

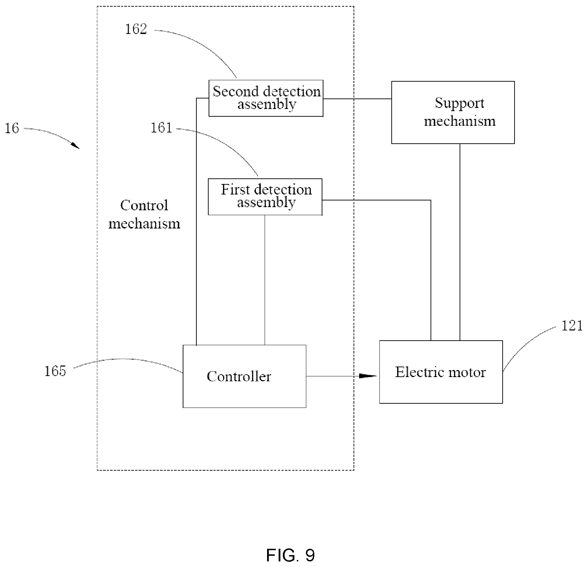

The drill rod mechanism includes a drill shaft 21 and a spiral drill blade 22 mounted on the drill shaft 21. When the ground is hard or a stone or a hard rock (such as granite or limestone) is encountered during hole drilling, the spiral drill blade 22 may fail to be pushed downward and may recoil, resulting in the application of opposite torque to the operator of the handheld digging tool 100. If the operator grips the handle of the handheld digging tool 100 with no sufficient force, the drill rod mechanism stalls and the main body 1 starts rotating about its own axis in an opposite direction when the recoil occurs and the electric motor 121 keeps working. This is particularly dangerous for the operator since the operator still grips the handle by hand. Under some working conditions, when the rock is encountered and the machine fails to work, the output torque is suddenly increased due to a load. In the case where the operator is off-guard, the handle of the machine may be caused to be out of control of the hand of the operator, and the operator is injured by the rotating handle of the machine. Therefore, it is necessary to provide an apparatus for preventing the recoil from injuring the operator. In this example, the control mechanism 16 is configured to control the running of the electric motor 121. As shown in FIG. 9, the control mechanism 16 includes a first detection assembly 161, a second detection assembly 162, and a controller 165. The first detection assembly 161 is configured to detect a load parameter of the drill rod mechanism. The second detection assembly 162 is configured to detect a position parameter and/or a position change parameter of the support mechanism 11. The controller 165 is configured to limit the torque output of the electric motor 121 when the load parameter reaches a first threshold, and the controller 165 is configured to limit the torque output of the electric motor 121 when the position parameter and/or the position change parameter reaches a second threshold.

The output torque of the drill rod mechanism is characterized by the load parameter, and the load parameter includes the rotational speed of the electric motor 121 and/or the current of the electric motor 121. The position parameter includes an angle by which the support mechanism 11 rotates about the first axis 101. The position change parameter includes angular **velocity** at which the support mechanism 11 rotates about the first axis 101, a change value of the angle by which the support mechanism 11 rotates about the first axis 101, and angular acceleration at which the support mechanism 11 rotates about the first axis 101. Optionally, the load parameter is mainly an electrical parameter of the electric motor 121. The position parameter and the position change parameter are mainly physical parameters of the position of the main body 1. Considering the occurrence of the recoil, the torque output of the electric motor 121 is limited in conjunction with different principles at the same time. In this example, limiting the torque output of the electric motor 121 refers to braking the electric motor 121 immediately or after a predetermined period of time. The control in the present invention is more accurate and safer than a single type of detection and control.

In some examples, limiting the torque output of the electric motor 121 refers to reducing the power supply to the electric motor 121, instead of cutting off the power supply to the electric motor 121. Therefore, the output torque of the electric motor 121 is reduced.

The controller 165 is configured to control the electric motor 12. The controller 165 is disposed on a control circuit board including a printed circuit board (PCB) and a flexible printed circuit (FPC) board. A dedicated control chip is used as the controller 165, for example, a single-chip microcomputer or a microcontroller unit (MCU).

In some examples, the first detection assembly 161 is a current sensor. Optionally, the first detection assembly 161 may be implemented as a current sensing resistor, an operational amplifier, a converter, or another similar electronic device. The second detection assembly 162 may be a position sensor. Optionally, the second detection assembly 162 may be a photodiode sensor, a magnetic sensor, or a potentiometer. The second detection assembly 162 may be a rotation sensor, specifically, a gyroscope sensor. The gyroscope sensor may be a single-axis, two-axis, or three-axis microelectromechanical systems (MEMS) sensor or a rotation-type sensor. Other types of sensors also belong to the content disclosed by the present invention. In some examples, the gyroscope sensor detects acceleration at which the support mechanism 11 or the drive mechanism 12 rotates about their own axis.

The second detection assembly detects that any acceleration component (or combination) exceeds a certain threshold and lasts for a certain period of time, it is determined that the recoil occurs, and the torque output of the electric motor is limited.

In some examples, two acceleration components in the plane of rotation of the main body are selected. If each of the two acceleration components exceeds a certain threshold and lasts for a certain period of time, the recoil is determined, and the torque output of the electric motor is limited.

The second detection assembly is disposed on the top of the electric motor or a side surface of the electric motor.

The controller 165 is configured to shut down the electric motor 121 after a preset period of time when the load parameter reaches a third threshold. Within the preset period of time, the rotational speed of the electric motor 121 is linearly reduced from a present rotational speed until the electric motor 121 shuts down. In some examples, within the preset period of time, the rotational speed of the electric motor 121 is reduced from the present rotational speed at a constant speed until the electric motor 121 shuts down. In some examples, within the preset period of time, the rotational speed of the electric motor 121 is reduced from the present rotational speed at a variable speed through a quadratic curve until the electric motor 121 shuts down. The third threshold is an overcurrent threshold. That is to say, when overcurrent occurs in the electric motor 121, the electric motor 121 is linearly decelerated within the preset period of time until the electric motor 121 shuts down. Thus, the safety of the electric motor 121 and the safety of the operator are ensured.

The handheld digging tool 100 includes a brake switch. When the brake switch is triggered, the electric motor 121 stops rotating. The handheld digging tool 100 further includes the start switch. When the start switch is triggered, the electric motor 121 starts rotating. In this example, the brake switch and the start switch refer to two states of one switch unit 152, that is, the trigger. Of course, in some examples, the brake switch and the start switch may be two separate switches. The controller 165 is configured to limit the torque output of the electric motor 121 when the brake switch is not triggered and a change value of the rotational speed of the electric motor 121 within second preset time reaches a preset change threshold. That is to say, when the rotational speed of the electric motor 121 changes suddenly or abnormally, the torque output of the electric motor 121 is limited so that the safety of the electric motor 121 is ensured.

The second detection assembly 162 is further configured to detect a second position parameter, where the second position parameter includes the value of displacement of the support mechanism 11 along the direction of the first axis 101. After the torque output of the electric motor 121 is limited, the controller 165 is configured to control the electric motor 121 to rotate in an opposite direction when the value of upward displacement of the handheld digging tool driven by the user reaches a preset displacement threshold. After the rotor of the power tool is locked, the controller controls the electric motor to automatically rotate in the opposite direction when the operator lifts the tool up.

When the electric motor 121 is controlled to start, the control mechanism 16 includes a third detection assembly 163. The third detection assembly 163 is configured to detect a parameter of a press to which the support mechanism 11 is subjected. The controller 165 is configured to control the electric motor 121 to drive the drill rod mechanism to move when the parameter of the press reaches a start threshold and the power supply is electrically connected to the power supply circuit. The power supply is electrically connected to the power supply circuit, that is to say, the start switch is triggered. The parameter of the press includes displacement caused by downward movement of the support mechanism 11 along the direction of the first axis 101, pressure to which the support mechanism 11 is subjected along the direction of the first axis 101, and a reaction force from the drill rod mechanism to which the support mechanism 11 is subjected along the direction of the first axis 101.

The handheld digging tool 100 further includes an environment detection assembly 164. The environment detection assembly 164 is configured to detect lines of a power grid, gas lines, and water pipes in a working environment. Thus, the protection of public facilities in a drilling and digging process is ensured, and public safety is ensured.

Some of the preceding detection assemblies may be used individually, or a combination of several technical solutions may be used.

## Claims

1. A handheld digging tool (100), comprising a main body (1) and a first drill rod mechanism (2) with a first function;
wherein the main body (1) is configured to be adapted for a second drill rod mechanism (3) with a second function; and
the main body (1) comprises:
a support mechanism (11);
a drive mechanism (12) supported by the support mechanism (11), comprising a direct current (DC) motor (121), and configured to be selectively connected to one of the first drill rod mechanism (2) and the second drill rod mechanism (3) to drive the first drill rod mechanism (2) or the second drill rod mechanism (3) to work; and
a battery pack (13) for supplying power to the DC motor (121),
wherein a nominal voltage of the battery pack (13) is greater than 40 V and less than 80 V; **characterized in that**
a maximum output torque of the handheld digging tool (100) is greater than or equal to 80 N·m; wherein
the DC motor (121) is a brushless DC motor (121) with an external rotor;
and
a weight of the handheld digging tool (100) is greater than or equal to 14 kg.

2. The handheld digging tool (100) according to claim 1, wherein the maximum output torque of the handheld digging tool (100) is greater than or equal to 85 N·m.

3. The handheld digging tool (100) according to claim 1, wherein a ratio of the maximum output torque of the handheld digging tool (100) to a weight of the handheld digging tool (100) is higher than or equal to 4.0 N·m/kg.

4. The handheld digging tool (100) according to claim 1, wherein the drive mechanism (12) further comprises a transmission assembly (14) disposed on a side of the DC motor (121) facing the first drill rod mechanism (2).

5. The handheld digging tool (100) according to claim 4, wherein the transmission assembly (14) comprises a gear reduction assembly.

6. The handheld digging tool (100) according to claim 5, wherein the drive mechanism (12) has a first output rotational speed adapted for the first function and a second output rotational speed adapted for the second function.

7. The handheld digging tool (100) according to claim 1, wherein the DC motor (121) comprises an electric motor shaft (1215) rotating about an electric motor axis (102), and the first drill rod mechanism (2) rotates about a first axis (101) to drill a hole.

## Patentansprüche

1. Handgeführtes Grabwerkzeug (100), umfassend einen Hauptkörper (1) und einen ersten Bohrstangenmechanismus (2) mit einer ersten Funktion;
wobei der Hauptkörper (1) derart ausgebildet ist, dass er für einen zweiten Bohrstangenmechanismus (3) mit einer zweiten Funktion anpassbar ist; und
wobei der Hauptkörper (1) umfasst:
einen Stützmechanismus (11);
einen vom Stützmechanismus (11) getragenen Antriebsmechanismus (12), umfassend einen Gleichstrom-(DC)-Motor (121), und derart ausgebildet, dass er wahlweise mit einem der beiden, dem ersten Bohrstangenmechanismus (2) und dem zweiten Bohrstangenmechanismus (3), verbindbar ist, um wahlweise den ersten Bohrstangenmechanismus (2) oder den zweiten Bohrstangenmechanismus (3) anzutreiben; und
einen Akkupack (13) zum Versorgen des Gleichstrom-(DC)-Motors (121) mit elektrischer Leistung,
wobei eine Nennspannung des Akkupacks (13) größer als 40 V und kleiner als 80 V ist; **dadurch gekennzeichnet, dass**
ein maximales Ausgangsdrehmoment des handgeführten Grabwerkzeugs (100) größer als oder gleich 80 N·m ist; wobei
der Gleichstrom-(DC)-Motor (121) ein bürstenloser Gleichstrom-(DC)-Motor (121) mit einem Außenläufer ist; und
ein Gewicht des handgeführten Grabwerkzeugs (100) größer als oder gleich 14 kg ist.

2. Handgeführtes Grabwerkzeug (100) nach Anspruch 1, wobei das maximale Ausgangsdrehmoment des handgeführten Grabwerkzeugs (100) größer als oder gleich 85 N·m ist.

3. Handgeführtes Grabwerkzeug (100) nach Anspruch 1, wobei ein Verhältnis des maximalen Ausgangsdrehmoments des handgeführten Grabwerkzeugs (100) zu einem Gewicht des handgeführten Grabwerkzeugs (100) größer als oder gleich 4.0 N·m/kg ist.

4. Handgeführtes Grabwerkzeug (100) nach Anspruch 1, wobei der Antriebsmechanismus (12) ferner eine Getriebeeinheit (14) umfasst, die an einer dem ersten Bohrstangenmechanismus (2) zugewandten Seite des Gleichstrom-(DC)-Motors (121) angeordnet ist.

5. Handgeführtes Grabwerkzeug (100) nach Anspruch 4, wobei die Getriebeeinheit (14) eine Zahnraduntersetzungsanordnung umfasst.

6. Handgeführtes Grabwerkzeug (100) nach Anspruch 5, wobei der Antriebsmechanismus (12) eine erste Ausgangsdrehzahl, die für die erste Funktion angepasst ist, und eine zweite Ausgangsdrehzahl, die für die zweite Funktion angepasst ist, aufweist.

7. Handgeführtes Grabwerkzeug (100) nach Anspruch 1, wobei der Gleichstrom-(DC)-Motor (121) eine Elektromotorwelle (1215) umfasst, die um eine Elektromotorachse (102) rotiert, und wobei der erste Bohrstangenmechanismus (2) um eine erste Achse (101) rotiert, um ein Loch zu bohren.

## Revendications

1. Outil de creusement portatif (100), comprenant un corps principal (1) et un premier mécanisme de tige de forage (2) ayant une première fonction ;
dans lequel le corps principal (1) est configuré pour être adaptable à un deuxième mécanisme de tige de forage (3) ayant une deuxième fonction ; et
le corps principal (1) comprenant :
un mécanisme de support (11) ;
un mécanisme d'entraînement (12) supporté par le mécanisme de support (11), comprenant un moteur à courant continu (DC) (121), et configuré pour être connecté de manière sélective à l'un des deux, à savoir le premier mécanisme de tige de forage (2) et le deuxième mécanisme de tige de forage (3), afin d'entraîner le premier mécanisme de tige de forage (2) ou le deuxième mécanisme de tige de forage (3) ; et
un bloc-batterie (13) destiné à alimenter le moteur à courant continu (DC) (121),
dans lequel une tension nominale du bloc-batterie (13) est supérieure à 40 V et inférieure à 80 V ; **caractérisé en ce que**
un couple de sortie maximal de l'outil de creusement portatif (100) est supérieur ou égal à 80 N·m ;
le moteur à courant continu (DC) (121) est un moteur à courant continu sans balais (121) à rotor externe ; et
un poids de l'outil de creusement portatif (100) est supérieur ou égal à 14 kg.

2. Outil de creusement portatif (100) selon la revendication 1, dans lequel le couple de sortie maximal de l'outil de creusement portatif (100) est supérieur ou égal à 85 N·m.

3. Outil de creusement portatif (100) selon la revendication 1, dans lequel un rapport du couple de sortie maximal de l'outil de creusement portatif (100) au poids de l'outil de creusement portatif (100) est supérieur ou égal à 4.0 N·m/kg.

4. Outil de creusement portatif (100) selon la revendication 1, dans lequel le mécanisme d'entraînement (12) comprend en outre un ensemble de transmission (14) disposé sur un côté du moteur à courant continu (DC) (121) faisant face au premier mécanisme de tige de forage (2).

5. Outil de creusement portatif (100) selon la revendication 4, dans lequel l'ensemble de transmission (14) comprend un ensemble de réduction à engrenages.

6. Outil de creusement portatif (100) selon la revendication 5, dans lequel le mécanisme d'entraînement (12) présente une première vitesse de rotation de sortie adaptée à la première fonction et une deuxième vitesse de rotation de sortie adaptée à la deuxième fonction.

7. Outil de creusement portatif (100) selon la revendication 1, dans lequel le moteur à courant continu (DC) (121) comprend un arbre de moteur électrique (1215) tournant autour d'un axe de moteur électrique (102), et le premier mécanisme de tige de forage (2) tourne autour d'un premier axe (101) afin de forer un trou.
